# EUROPEAN PATENT SPECIFICATION

(11) **EP 1 401 159 B1**
(45) Date of publication and mention of the grant of the patent: **10.09.2008**
(21) Application number: 02425566.3
(22) Date of filing: 20.09.2002
(51) Int. Cl.: H04L 12/56

(54) **A configurable piggybacked single bit bandwidth requesting method in point-to-multipoint radio systems**
Verfahren und System zur Reservierung von Bandbreite mit einem konfigurierbaren piggyback Bit in einem punkt-zu-mehrpunkt Funkkommunikationssystem
Méthode et système de réservation de bande passante au moyen d'un bit piggyback configurable dans un système de radiocommunication point-à-multipoint

(43) Date of publication of application: 24.03.2004
(73) Proprietor: Siemens S.p.A., 20126 Milano (IT)
(72) Inventor: Cavalli, Giulio, 20159 Milano (IT); Santacesaria, Claudio, 20139 Milano (IT)
(74) Representative: Maier, Daniel Oliver

(56) References cited:
- EP-A- 0 912 015
- US-A1- 2002 080 816
- US-A1- 2002 122 411

## Description

### FIELD OF THE INVENTION

The present invention relates to point-to-multipoint radio systems, as well as to other transmission systems working on different physical media, which adopt a piggybacked single bit bandwidth request mechanism, known in some prior art as "poll-me bit" to report the status of the transmitter buffers.

### BACKGROUND ART

In point-to-multipoint systems, whatever physical medium is used, a master station and one or several terminal stations, also called terminals, are defined.

The transmissions from the master station to one or more terminal stations are made on one logical channel, also called "downstream channel", typically with time division multiplexing approach.

The transmissions from the terminal stations to the master are made on another logical channel, also called "upstream channel". The upstream is divided from the downstream channel by time division duplexing or by frequency division duplexing, that is the transmissions in upstream direction could be made either in different frequency channels, or in the same frequency channel but in different time-intervals.

In other physical media, alternative duplexing mechanisms could be used.

The upstream channel is a shared medium, where all the terminals within the system are instructed for the transmission. Precise rules shall be implemented in order to instruct the terminals about the transmission. The master station has to distinguish the signals transmitted by all the terminals. Time division multiple access technique, also called TDMA, is used to distinguish the signals in upstream. It should be understood that the present invention is not limited thereto since other techniques of multiplexing may be used in combination with the present invention by those skilled in the art without departing from the ambit of the invention. With TDMA technique terminals are time synchronized with the master and instructed to transmit in precise periods of time.

The master station, in order to efficiently share the medium among all the terminals, needs to have the knowledge of the transmission needs from all the terminals at any give time. lf some terminals have nothing to transmit, the master doesn't give to them any opportunity for transmission. The upstream channel is shared by terminals that require a certain amount of bandwidth in order to deliver traffic. The master distributes the available bandwidth among terminals that require bandwidth according to the contract stipulated with every single terminal.

In a P-MP system, a lot of well known techniques that make the master aware about the needs of transmission of every single terminal could be implemented, as, for example, described in the international application WO 00/72626A1.

The traffic, delivered between master and terminal, is organized by connections. A single terminal could handle a lot of connections. Moreover every connection is composed of packet data units, also called PDUs. A terminal transmits packet data units, each one carrying a certain amount of data to the master and belonging to a specific connection. Every PDU has a payload part, that is the data to be transported, and a header part, that is used by the system to transport information about that particular PDU and other information required for the system to function properly.

The connections, handled by a single terminal, are also grouped into connection aggregates. Every connection aggregate has its identifier and a terminal could have a lot of connections grouped into several connection aggregates. This is often done to group connections according to the Quality of Service.

The terminals have to store the PDUs in buffers, also called queues, while waiting the opportunity to transmit them. There is at least one queue for every connection aggregate. In the following we will assume that a single queue is associated with every connection aggregate even if specific implementations may associate more queues to a single connection aggregate. The status of one connection aggregate expresses the presence or not of at least one PDU in the buffer of the above mentioned connection aggregate. If the status is "active" at least one PDU is present in the queue associated to the above mentioned connection aggregate. If the status is "idle" the queue of the above mentioned connection aggregate is empty.

In the header of the PDU a lot of informational fields are present. Some of these fields are used by the terminal that is sending the PDU to request bandwidth for the transmission. In particular a one bit field is in some prior art defined "poll-me bit"; This field, present in the header of every uplink PDU, is used by the terminal to communicate the status of all its connection aggregates, typically with the exclusion of the connection aggregate that is associated to the PDU that is carrying the poll-me bit, for which a separate field may be used for piggybacking a more detailed information involving not only the active-idle state but also the length of the queue.

When a master receives, from a terminal, the poll-me bit that indicates the status is "active", the said master knows that the terminal has something to transmit in the queues of at least one of the other connection aggregates.

Document US 2002/0080816 A1 relates to a method for adaptively obtaining bandwidth requests in a broadband wireless communication system. A user may piggyback a new bandwidth request upon presently allocated bandwidth. Using these bandwidth requests, the base station may reconstruct logical pictures of the state of the CPE data queues to form an overall uplink queue picture of the entire channel.

Document EP 0 912 015 A2 relates to a method for overload control in a wireless communications network employing on-demand multiple access fair queuing. If a remote station has additional packets to be transmitted, it piggybacks a reservation request for the next packet on the current packet being transmitted, thus avoiding the need to transmit a request in contention mode.

Document US 2002/0122411 A1 relates to a method for packing management messages in a broadband wireless communication system. Management messages can be piggybacked on bandwidth allocated to a CPE. Currently active CPEs send management messages using previously unused portions of uplink bandwidth that is already allocated to the CPE.

The known methods associate the poll-me bit to all the connection aggregates or to a predefined group of connection aggregates. A typical example of predefined group of connection aggregates is the group of all connection aggregates with the exclusion of the one associated to the connection of the PDU which is carrying the poll-me bit. The poll-me bit assigning mechanism of the prior art is quite rigid because drives the poll-me bit "active" most of the time due to a connection aggregate that do not need actions to react to a queue status. For example, when a group of real time connections need to be addressed by a continuous stream of transmit opportunities not solicited by information on the queue status. Sending a poll-me bit for such connections only contributes to reducing the informational content of the poll-me bit itself, soliciting more bandwidth or at least actions from the master station which are not really required. In such example the poll-me bit is active most of the time due to a connection aggregate that do not need actions to react to a queue status. That is the active poll-me bit status carries limited information, because the master cannot distinguish among all the connection aggregates associated to the poll-me bit.

### OBJECT OF THE INVENTION

The object of the present invention is to overcome the defect of the prior art and indicate a method for requesting bandwidth in point to multipoint transmission systems by the only activation of the poll-me bit when it is really useful, avoiding waste of bandwidth and inefficiency consequently.

### SUMMARY OF THE INVENTION

Object of the present invention is therefore a method for bandwidth requesting in point to multipoint transmission systems, as disclosed in claim 1. According to the claimed method the master, typically during the phase of connection setup, besides associating connections to connection aggregates, associates the poll-me bit to a subset of connection aggregates. In this way the terminal knows which connection aggregates and therefore which connections should be monitored to generate the poll-me bit that finally reports to the master only the status of the associated connection aggregates. It is optionally possible to combine the features of the claimed method with the well known technique, already described, to exclude from the poll-me bit calculation, the connection aggregate to which the PDU, carrying the poll-me bit belongs to. If the PDUs are only present in queues not associated with the poll-me bit, the piece of information associated to the poll-me bit reports that the status is "idle". lnstead if there is at least one PDU in at least one queue associated with the poll-me bit, the piece of information associated to the poll-me bit, within a PDU not belonging to the connection aggregate of the above mentioned PDU in the queue, reports that the status is "active".

Since the method of present invention allows associating the poll-me bit with a restricted number of connection aggregates, the poll-me bit could be configured to report the active value only when it is really useful, avoiding waste of bandwidth and inefficiency. Considering, as an example, an extreme case when the poll-me bit is configured to be associated to only one connection aggregate, the poll-me bit reports the queue status of that specific buffer. As a consequence if the master receives, from a terminal, a poll-me bit that indicates that the status is active, the above mentioned master knows without any doubt that this terminal has a PDU to be transmitted in that specific above mentioned buffer. The master can properly react to serve the above mentioned terminal.

The feature of the configurable poll-me bit represented by the present invention is particularly useful when real time connections are present. As known, this type of connections has stringent time requirements and they should be served the sooner and the better.

Other subject of the present invention is a point to multipoint system operating in accordance with the method of above.

### BRIEF DESCRIPTION OF THE DRAWINGS

The features of the present invention which are considered to be novel are set forth with particularity in the appended claims. The invention, together with further objects and advantages thereof, may be understood with reference to the following detailed description of an embodiment thereof taken in conjunction with the accompanying drawings given for purely non-limiting explanatory purposes and wherein:
- **fig.1** shows the presence of a Poll-me bit field in the header of a PDU managed by the method for bandwidth requesting of the present invention; and
- **fig.2** shows a point-to-multipoint transmission system operating in accordance with the method of the present invention.

### DETAILED DESCRIPTION OF THE PREFERRED EMBODIMENT

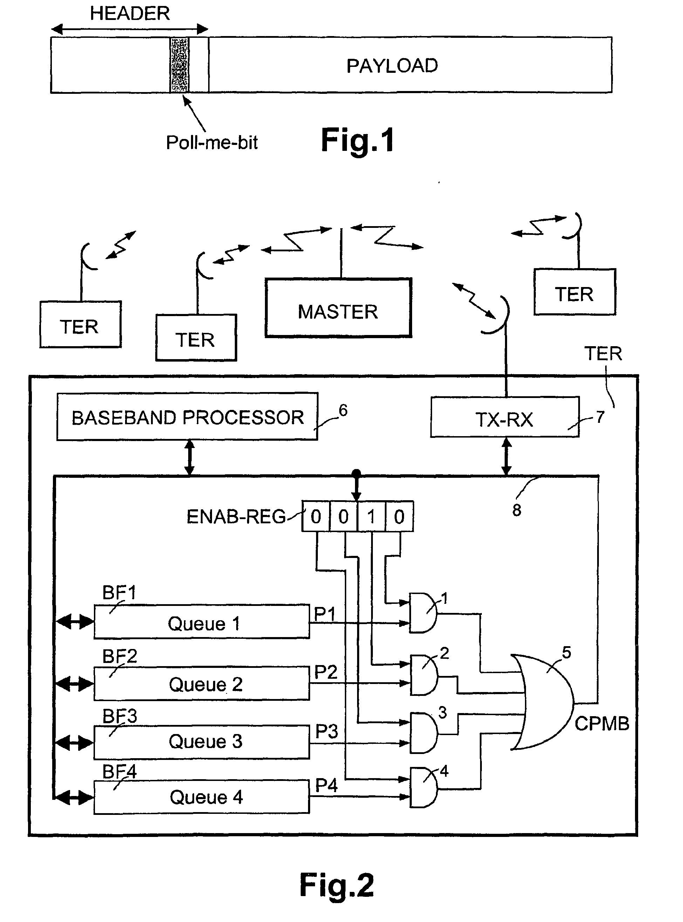

With reference to **fig.1** a Poll-me bit is visible inside the HEADER of a Protocol Data Unit (PDU) transmitted by a peripheral terminal (not shown) to the master (not shown) in order to perform a bandwidth request. Without limitation, four types of connection are foreseen in the present embodiment. All the connections belonging to the same type are grouped into the same connection aggregate, so that four connection aggregates are defined and each of them has its own buffer for queuing the PDUs.

**Fig.2** shows a point-to-multipoint transmission system including a Master transmitting and receiving base station in communication with several terminal stations TER. With reference to **fig.2** inside a block TER the following elements are represented:
- four buffers BF1 to BF4 for buffering as many queues 1 to 4;
- four two-input gates 1 to 4 of logical AND type;
- a logical OR gate 5;
- a register ENAB-REG;
- a baseband processor 6, and
- a TX-RX.7.

All blocks inside the block TER, except the AND gates, are connected to the processor bus 8. At the output of the buffers BF1 to BF4 are indicated four Poll-me bit P1 to P4 directed to first inputs of the AND gates 1 to 4, while second inputs receive four bits stored in the register ENAB-REG to be associated with corresponding queues 1 to 4. The four outputs of the AND gates are directed to as many inputs of a logical OR 5, which outputs a configurable Poll-me bit CPMB directed to the bus 8.

In operation, the buffers BF1 to BF4 store the queues 1 to 4 of the PDUs traffic generated by the processor 6, to be transmitted on the uplink connections assigned to the terminal TER. Equivalent queues for downlink connections are not involved in the present invention and are not depicted consequently. Queues 1 has the highest priority; queue 2 supports the real time connection aggregate and it has the second higher priority; queues 3 and 4 have the lowest priority and in particular they have no time requirement. Register ENAB-REG is written by the Master for masking the transmission of the individual Poll-me bits P1 to P4 except the one/ones of the configured queue/s. In the embodiment of **fig.2** the poll-me bit CPMB is configured to be associated to the only queue 2 of the real time connections, that cannot wait too much to be transmitted. Queues 1 to 4 are managed by the baseband processor 6 in order to deliver suitable modulated signals to the TX-RX block to be frequency converted at RF and uplink transmitted. For duality, on the reverse link the RF signals are frequency down-converted by the TX-RX block and delivered to the baseband processor which demodulates the relevant signals. Relevant signals transmitted by the terminal TER are the queued PDUs and the configured Poll-me bit CPMB, while the received signals include the content of the register ENAB-REG. Now the various steps of the method are described:
- The master station groups together all the connections belonging to the same type into a same connection aggregate and performs a periodic (but not necessarily cadenced) polling to give to every terminal TER the opportunity to send to the master the detailed information about the needs of its transmission queues. The master sends periodically to every terminal a message asking the detailed needs of transmissions.
- The polled terminal replies with the information of queue status for each connection aggregate and how many packet data units it has to transmit for each connection aggregate.
- It could be possible that in a specific moment a terminal has nothing to transmit from the connection aggregate 2, that is real time connections, and from connection aggregate 3 and 4. When the above mentioned terminal is polled by the master it reports that it has to transmit nothing but traffic belonging to the first connection aggregate. The master reacts giving the opportunity of transmissions only for traffic of the first connection aggregate 1.
- Than, immediately after the above mentioned polling, the terminal might receive some traffic belonging to real time connections 2. This terminal has not enough bandwidth to transmit packet data units of the connection aggregate two because the master doesn't give to this terminal the opportunity to transmit this type of traffic, since the master has the information that nothing, belonging of the connection aggregate two, has to be transmitted.
- The above terminal, without waiting the said periodical polling opportunity from the master, can send to the master the poll-me bit within the header of the packet data units carrying traffic of connection aggregate one, indicating an "active" status. The master in this way is aware that this terminal has time critical traffic to transmit and the master will give the opportunity to transmit this type of traffic as soon as possible. If the poll-me bit was not associated only to the connection aggregate 2 but also to connection aggregate 3 and 4, the master would have not been aware if the traffic to be transmitted was time critical or not. The way implemented by the Master to configure the poll-me bit to the only connection aggregate 2 is that of writing a suitable masking pattern into the register ENAB-REG. If the traffic to be transmitted is not time critical it's useless to give the opportunity for the transmission as soon as possible, but it could be sufficient for the terminal to wait until the periodic polling.

With the method of the invention, since the poll-me bit is configurable and it's possible to associate it to time critical connections, the master can efficiently manage the priority of the transmissions to terminals that have time critical needs of transmission. lf some connections, such as the highest priority ones, are handled without the use of the queue status, with the method of the invention is also possible to exclude them from the poll-me bit generation.

## Claims

1. Method for bandwidth requesting by one or more terminal stations to a master station, including the steps of:
- organizing, by the master, the uplink traffic in connections conveying data units from each terminal station to the master;
- organizing, by the master, said connections in groups constituting connection aggregates whose component parts are communicated to an originating terminal stations through downlink messages, the terminal being the terminal using several connection aggregates;
- sending, by the terminal, uplink messages to inform the master of its transmission needs;
- sending, by the terminal, in an uplink data unit one piggybacked bit, also called "poll-me bit", to communicate to the master the status of the queues of its connection aggregates,
**characterized in that** the master performs a step of:
- associating the poll-me bit to a configurable group of connection aggregates and informing the terminal about the association, the group being a subset of the connection aggregates of the terminal, for indicating with its active state the presence of at least one data unit in at least one queue of said subset, and with its idle state the absence of a such data unit.

2. Method of claim 1 **characterized in that** said configurable group of connections is a subset of the connection aggregates currently in use in the terminal station (TER), the subset including connections with time critical needs of transmission.

3. Method of claim 2 **characterized in that** the connection aggregate whose data unit carrying the poll-me bit belongs is automatically excluded from the activation of the poll-me bit.

4. Method of one of the preceding claims **characterized in that** said downlink message is a parameter of the connection setup procedure that explicitly tells the terminal whether the connection, or connection aggregate the connection belongs to, will be part of said configurable group of connections that takes part in the generation of the poll-me bit.

5. Point to multipoint transmission system including a master station and one or more terminal stations:
- said master station including processor means for grouping together the uplink connections into connection aggregates, and means for polling the uplink bandwidth requests of said terminals;
- each terminal station including means for buffering (BF1, BF2, BF3, BF4) the uplink traffic queues and means for generating uplink queue status information (ENAB-REG, 1, 2, 3, 4, 5) including at least one single bit information, also called "Poll-me bit", embedded in an uplink data unit header for bandwidth requesting;
**characterized in that** said means for generating queue status information are arranged to performing a logical OR (5) of the empty / non-empty status of a subset of the queues associated with said connection aggregates according to an association of the poll-me bit to a configurable group of connection aggregates by the master station.

6. System of the preceding claim, **characterized in that** the master station includes means for generating a message with a specific association field to inform the terminal station (TER) of which queues belong to said subset.

7. System of claim 5 or 6, **characterized in that** each terminal station (TER) includes means (ENAB-REG) operated by the master to control in a configurable fashion which queues belong to said subset.

8. System of claim 5, 6 or 7, **characterized in that** each terminal (TER) includes means to exclude dynamically from the poll-me bit generation the queue or the group of queues to which the data unit carrying the current poll-me bit belongs, regardless of its belonging to said subset.

## Patentansprüche

1. Verfahren zum Anfordern von Bandbreite durch eine oder mehrere Datenstationen bei einer Leitstelle, das folgende Schritte umfasst:
- Organisieren des Aufwärtsverkehrs bei Verbindungen, die Dateneinheiten von den einzelnen Datenstationen zur Leitstelle übertragen, durch die Leitstelle,
- Organisieren der Verbindungen durch die Leitstelle in Gruppen, die Verbindungsaggregate bilden, deren Komponenten über Abwärtsmeldungen an eine Ursprungsdatenstation übermittelt werden, wobei es sich bei der Datenstation um die Datenstation handelt, die mehrere Verbindungsaggregate verwendet,
- Senden von Aufwärtsmeldungen durch die Datenstation, um die Leitstelle über deren Übertragungsbedarf zu informieren,
- Senden eines Huckepack-Bits, das auch als Abrufbit (Poll-me-Bit) bezeichnet wird, in einer Aufwärtsdateneinheit durch die Datenstation, um der Leitstelle den Status der Warteschlangen ihrer Verbindungsaggregate mitzuteilen,
**dadurch gekennzeichnet, dass** die Leitstelle folgenden Schritt ausführt:
- Assoziieren des Abrufbits mit einer konfigurierbaren Gruppe aus Verbindungsaggregaten und Informieren der Datenstation über die Assoziation, wobei es sich bei der Gruppe um eine Teilmenge der Verbindungsaggregate der Datenstation handelt, die mit ihrem aktiven Zustand das Vorhandensein mindestens einer Dateneinheit in mindestens einer Warteschlange der Teilmenge und mit ihrem Ruhezustand das Fehlen einer solchen Dateneinheit anzeigt.

2. Verfahren nach Anspruch 1, **dadurch gekennzeichnet, dass** es sich bei der konfigurierbaren Gruppe von Verbindungen um eine Teilmenge der in der Datenstation (TER) derzeit benutzten Verbindungsaggregate handelt, wobei zu der Teilmenge Verbindungen mit zeitkritischem Übertragungsbedarf gehören.

3. Verfahren nach Anspruch 2, **dadurch gekennzeichnet, dass** das Verbindungsaggregat, zu dem die das Abrufbit tragende Dateneinheit gehört, automatisch von der Aktivierung des Abrufbits ausgeschlossen wird.

4. Verfahren nach einem der vorhergehenden Ansprüche, **dadurch gekennzeichnet, dass** es sich bei der Abwärtsmeldung um einen Parameter des Verbindungsaufbauvorgangs handelt, der der Datenstation ausdrücklich mitteilt, ob die Verbindung oder das Verbindungsaggregat, zu dem die Verbindung gehört, Bestandteil der konfigurierbaren Gruppe von Verbindungen sein wird, die an der Erzeugung des Abrufbits beteiligt ist.

5. Punkt-zu-Mehrpunkt-Übertragungssystem, zu dem eine Leitstelle und eine oder mehrere Datenstationen gehören:
- wobei zur Leitstelle Prozessormittel für das Zusammengruppieren der Aufwärtsverbindungen in Verbindungsaggregaten und Mittel für das Abrufen der Aufwärtsbandbreitenanforderungen der Datenstationen gehören,
- wobei jede Datenstation Mittel zum Puffern (BF1, BF2, BF3, BF4) der Aufwärtsverkehr-Warteschlangen aufweist und Mittel zum Erzeugen von Aufwärtswarteschlangen-Statusinformationen (ENAB-REG, 1, 2, 3, 4, 5), die zumindest ein Einzelbit an Informationen enthalten, das auch als Abrufbit bezeichnet wird und zur Bandbreitenanforderung in den Kopf einer Aufwärtsdateneinheit eingebettet ist,
**dadurch gekennzeichnet, dass** die Mittel zum Erzeugen von Warteschlangen-Statusinformationen so ausgelegt sind, dass sie eine logische ODER-Operation (5) an den Leer-/ Nicht-Leer-Status einer Teilmenge der Warteschlangen durchführen, die gemäß einer Assoziation des Abrufbits mit einer konfigurierbaren Gruppe von Verbindungsaggregaten durch die Leitstelle mit den Verbindungsaggregaten assoziiert ist.

6. System nach dem vorhergehenden Anspruch, **dadurch gekennzeichnet, dass** zur Leitstelle Mittel gehören, mit denen eine Meldung mit einem bestimmten Assoziationsfeld erzeugt wird, um die Datenstation (TER) darüber zu informieren, welche Warteschlangen zu der Teilmenge gehören.

7. System nach Anspruch 5 oder 6, **dadurch gekennzeichnet, dass** zu jeder Datenstation (TER) Mittel (ENAB-REG) gehören, die von der Leitstelle betrieben werden, so dass auf konfigurierbare Weise gesteuert werden kann, welche Warteschlangen zu der Teilmenge gehören.

8. System nach Anspruch 5, 6 oder 7, **dadurch gekennzeichnet, dass** zu jeder Datenstation (TER) Mittel gehören, die auf dynamische Weise die Warteschlange oder die Gruppe von Warteschlangen, zu der die das derzeitige Abrufbit tragende Dateneinheit gehört, unabhängig von deren Zugehörigkeit zur Teilmenge von der Erzeugung des Abrufbits ausschließen.

## Revendications

1. Méthode de réservation de bande passante adressée par une ou plusieurs station/s terminale/s à une station maître, incluant les étapes de :
- organisation par le maître du trafic montant dans des connexions acheminant des unités de données de chaque station terminale vers le maître ;
- organisation par le maître desdites connexions en groupes constituant des agrégats de connexions dont les parties constituantes sont communiquées à une station terminale d'origine par le biais de messages descendants, le terminal étant le terminal qui utilise plusieurs agrégats de connexions ;
- émission par le terminal de messages montants pour informer le maître de ses besoins de transmission ;
- émission par le terminal, dans une unité de données montante, d'un bit superposé, également appelé bit "poll-me", pour communiquer au maître l'état des files d'attente de ses agrégats de connexions,
**caractérisée en ce que** le maître exécute une étape de :
- association du bit poll-me à un groupe configurable d'agrégats de connexions et information du terminal à propos de l'association, le groupe étant un sous-ensemble des agrégats de connexions du terminal, pour indiquer, par son état actif, la présence d'au moins une unité de données dans au moins une file d'attente dudit sous-ensemble et, par son état au repos, l'absence d'une telle unité de données.

2. Méthode selon la revendication 1, **caractérisée en ce que** ledit groupe configurable de connexions est un sous-ensemble des agrégats de connexions actuellement utilisés dans la station terminale (TER), le sous-ensemble incluant des connexions qui présentent des besoins de transmission critiques dans le temps.

3. Méthode selon la revendication 2, **caractérisée en ce que** l'agrégat de connexions auquel appartient l'unité de données portant le bit poll-me est automatiquement exclu de l'activation du bit poll-me.

4. Méthode selon l'une des revendications précédentes, **caractérisée en ce que** ledit message descendant est un paramètre de la procédure d'établissement de connexion qui indique explicitement au terminal si la connexion, ou l'agrégat de connexions auquel appartient la connexion, fera partie dudit groupe configurable de connexions participant à la génération du bit poll-me.

5. Système de transmission point à multipoint incluant une station maître et une ou plusieurs station/s terminale/s :
- ladite station maître incluant un moyen de processeur pour regrouper les connexions montantes en agrégats de connexions et un moyen pour scruter les demandes de bande passante montante desdits terminaux ;
- chaque station terminale incluant un moyen de mise en mémoire tampon (BF1, BF2, BF3, BF4) des files d'attente de trafic montant et un moyen de génération d'une information d'état de file d'attente montante (ENAB-REG, 1, 2, 3, 4, 5) incluant au moins une information sur un seul bit, également appelée bit "poll-me", intégrée dans un en-tête d'unité de données montante pour une réservation de bande passante ;
**caractérisée en ce que** ledit moyen de génération d'une information d'état de file d'attente est adapté pour opérer un OU logique (5) de l'état vide/non vide d'un sous-ensemble des files d'attente associé auxdits agrégats de connexions en fonction d'une association du bit poll-me à un groupe configurable d'agrégats de connexions par la station maître.

6. Système selon la revendication précédente, **caractérisé en ce que** la station maître inclut un moyen de génération d'un message comprenant un champ d'association spécifique pour informer la station terminale (TER) de quelles files d'attente appartiennent audit sous-ensemble.

7. Système selon la revendication 5 ou 6, **caractérisé en ce que** chaque station terminale (TER) inclut un moyen (ENAB-REG) mis en oeuvre par le maître pour contrôler d'une manière configurable quelles files d'attente appartiennent audit sous-ensemble.

8. Système selon la revendication 5, 6 ou 7, **caractérisé en ce que** chaque station terminale (TER) inclut un moyen pour exclure dynamiquement de la génération du bit poll-me la file d'attente ou le groupe de files d'attente à laquelle/auquel appartient l'unité de données portant le bit poll-me actuel, indépendamment de son appartenance audit sous-ensemble.
